# EUROPÄISCHE PATENTSCHRIFT

(11) **EP 2 806 722 B1**
(45) Veröffentlichungstag und Bekanntmachung des Hinweises auf die Patenterteilung: **11.10.2017**
(21) Anmeldenummer: 13700716.7
(22) Anmeldetag: 16.01.2013
(51) Int. Cl.: A01B 15/14, B23K 26/28, B62D 25/00

(54) **RAHMENBAUTEIL, INSBESONDERE PFLUGRAHMENBAUTEIL**
FRAME COMPONENT, IN PARTICULAR PLOW FRAME COMPONENT
ÉLÉMENT DE BÂTI, EN PARTICULIER ÉLÉMENT DE BÂTI DE CHARRUE

(30) Priorität: 24.01.2012 DE 102012100551
(43) Veröffentlichungstag der Anmeldung: 03.12.2014
(73) Patentinhaber: Amazonen-Werke H. Dreyer GmbH & Co. KG, 49205 Hasbergen (DE)
(72) Erfinder: LAUMANN, Bernhard, 48477 Hörstel - Riesenbeck (DE); RESCH, Rainer, 49170 Hagen a TW (DE)
(86) Internationale Anmeldenummer: PCT/EP2013/050747
(87) Internationale Veröffentlichungsnummer: WO 2013/110535

(56) Entgegenhaltungen:
- EP-A1- 1 709 861
- EP-A1- 2 301 826
- WO-A1-2009/112407
- DE-A1- 2 024 951
- DE-A1- 4 425 349
- DE-U1-202007 010 064

## Beschreibung

Die Erfindung bezieht sich auf ein Rahmenbauteil für beispielsweise landwirtschaftliche Geräte und Maschinen, insbesondere auf ein Pflugrahmenbauteil für Anhänge-, Aufsattel- und Anbaupflüge mit einem eine Oberseite, eine Unterseite sowie Seitenflächen aufweisenden Hohlprofilkörper, an dem Werkzeuge, Werkzeugträger, Konsolen, Stützräder oder dergleichen Anbauelemente abstützbar sind.

Rahmenbauteile für landwirtschaftliche Geräte und Maschinen, insbesondere auch Pflugrahmenbauteile, bestehen herkömmlicherweise aus Vierkanthohlprofilen, die gewalzt werden. Darüber hinaus sind Pflugrahmenbauteile als Schweißkonstruktionen aus z.B. verschweißten U-Profilkörpern bekannt. Rahmenbauteile und auch Pflugrahmenbauteile haben jedoch sehr variationsreiche und verschiedene Anforderungen zu erfüllen, um Werkzeuge, Werkzeugträger, Stützräder und dergleichen Anbauelemente zu haltern bzw. abzustützen, wozu besondere Aufnahmen am Rahmenbauteil vorzusehen sind. Dies erfordert weitere, vielfach anzuschweißende weitere Teile, um die baulichen Voraussetzungen zu schaffen, solche Anbauelemente sicher abzustützen, gleichwohl jedoch verschiedene Funktionen des Pfluges wie beispielsweise eine Breitenverstellung des Pflugrahmenbauteils bei z.B. einem Anbaudrehpflug sicherzustellen sind. Herkömmliche Rahmenbauteile, insbesondere auch Pflugrahmenbauteile erfordern daher zeitaufwändige und auch materialaufwändige Herstellungsverfahren, wobei örtliche Aussteifungen nur mit einem erhöhten Fertigungsaufwand realisiert werden können. Zudem kann es bei Schweißvorgängen zu Gefügeveränderungen der metallischen Werkstoffe kommen und zu Maßungenauigkeiten durch einen Verzug von Bauteilen durch die Wärmeeinwirkung beim Schweißen. Gefügeveränderungen können sich sehr nachteilig auf die Festigkeitseigenschaften des Rahmenbauteils auswirken.

Die EP 1709861 A1 offenbart einen Auswurfkrümmer für einen Feldhäcksler mit einem rahmen- und/oder gitterförmigen Stützzusammenbau, dessen Längsträger und Streben alternativ zum Verschweißen, Verschrauben, Vernieten oder Verlöten auch miteinander verklebt sein können.

Die DE 202007010064 U1 offenbart ein Spritzgestänge für den mobilen landwirtschaftlichen Einsatz.

Die WO 2009/112407 A1 offenbart ein Verfahren zur Herstellung eines Hohlprofils und einer Fahrzeugkarosserie.

Die EP 2301826 A1 offenbart ein Knotenelement für eine Fahrzeugrahmenstruktur.

Die DE 4425349 A1 offenbart ein Verfahren zum formschlüssigen Verbinden von zwei jeweils mindestens eine Hohlkammer aufweisenden Hohlprofilen.

Es ist Aufgabe der vorliegenden Erfindung, ein Rahmenbauteil, insbesondere ein Pflugrahmenbauteil der eingangs genannten Art zu schaffen, das mit vermindertem Fertigungsaufwand individuell den Anforderungen des Rahmenbauteils angepasst werden kann.

Zur Lösung dieser Aufgabe stellt die Erfindung ein Rahmenbauteil mit den Merkmalen des Anspruchs 1 bereit.

Vorteilhafte Weiterbildungen der Erfindung sind in den Unteransprüchen genannt.

Damit ist ein Rahmenbauteil zur Verfügung gestellt, bei dem keine Gefügeveränderung innerhalb des Profilkörpermaterials durch Schweißen und damit keine Gefahr eines Verzuges und damit Maßungenauigkeiten zu befürchten sind. Die Einzelbauteile können aus Stanzteilen bestehen, bei denen unabhängig voneinander besondere Werkstoffstrukturen und besondere Werkstoffeigenschaften, beispielsweise auch an bestimmten Stellen eines Einzelbauteils von vorneherein berücksichtigt werden können.

Gleiches gilt auch für Aufnahmen für Anbauelemente wie Körperkonsolen, Rahmenlager und/oder Stützräder, die bereits in Einzelbauteile zu integrieren sind. Auch unterschiedliche Wandstärken der Einzelbauteile können berücksichtigt werden. So ist es möglich, beispielsweise ein Einzelbauoberteil bzw. ein Einzelbauunterteil dickwandiger als zwischen diesen gelegene Zwischenbauteile auszubilden und auch diese Bauteile so zu gestalten, dass z.B. die Zwischenbauteile bzw. ein Zwischenbauteil nach oben oder seitlich durch Bereiche eines Einzelbauunterteils und/oder eines Einzelbauoberteils überragt wird, um dort die vorgenannten Aufnahmen für Anbauelemente wie Werkzeuge und Werkzeugträger auszubilden. Diese Bereiche können ihrer erhöhten Abstützanforderungen stärker belastbarer als andere Bereiche ausgebildet werden.

Hierbei kann ein Einzelbauoberteil und/oder ein Einzelbauunterteil im Wesentlichen im Querschnitt U-förmig mit abgewinkelten Seitenschenkeln, an denen Anbauelemente festlegbar sind, ausgebildet sein. Somit lassen sich in einfacher Weise Zusatztele am Rahmenbauteil befestigen.

Die Einzelbauteile, sei es das Einzelbauoberteil, das Einzelbauunterteil oder auch ein oder mehrere Zwischenbauteil(e), können ihrerseits ein-, doppel- oder mehrlagig ausgebildet sein, und auch aus mehreren Einzelteilen in Längsrichtung des Pflugrahmenbauteils zusammengesetzt werden, ohne dass es irgendwelcher Schweißnähte bedarf. Einzelbereiche können auch mit einem Härteüberzug versehen werden. Ein zusätzliches Anschweißen von zusätzlichen Verbindungs- oder Haltekörpern bedarf es in aller Regel nicht, weil die Anbindung bereits bei den Einzelbauteilen entsprechend berücksichtigt werden kann.

Damit bieten sich für das geklebte Rahmenbauteil mit vermindertem Fertigungsaufwand, aber verbesserten Materialeigenschaften weite Anwendungsgebiete an, insbesondere bei landwirtschaftlichen Geräten und Maschinen, wobei sehr individuell den jeweiligen Geräte- und Maschinenanforderungen bei der Herstellung der Einzelteile und der entsprechenden Materialauswahl von vornherein Genüge getan werden kann.

Hier bietet es sich an, das Einzelbauoberteil, das Einzelbauunterteil und/oder die Zwischenbauteile als Träger gleicher Festigkeit ausgebildet sind. So ergibt sich eine optimierte Materialausnutzung. So kann die Ausgestaltung der einzelnen Bauteile des Rahmens und somit das Rahmenbauteil selbst in den einzelnen Belastungsbereichen zumindest annähernd an die jeweiligen auf die einzelnen Bereiche einwirkenden Belastungen optimiert angepasst ausgebildet werden.

Um die Klebeverbindung und auch vorherrschende Kräfte in verschiedenen Richtungen berücksichtigt zu haben, können beispielsweise auch noch besondere Klebeverbindungsstellen als Formschlussverbindungen zwischen den zu verklebenden Bauteilen vorgesehen sein. Damit können Widerlager in verschiedenen Richtungen geschaffen werden, um Krafteinwirkungen aus verschiedenen Richtungen durch mechanische Anschläge entgegen zu wirken. Dazu kann beispielsweise durch Ausformungen oder Einformungen in entsprechend kongruenter Ausbildung der zu verbindenden Teile sichergestellt werden, dass eine Ausformung in eine Einformung eingesetzt und verklebt werden kann, beispielsweise auch zusätzlich zu sonst noch vorgesehenen ebenen aneinander zugewandten zu verklebenden Flächen. Die Ausformungen und Ausnehmungen können die verschiedensten geometrischen Gestaltungen haben, beispielsweise rund oder mehreckig gestaltet sein, aber auch die Gestalt von raupenartigen Erhebungen und Ausnehmungen haben, in die je nach den vorherrschenden Kraftrichtungen auch verschieden orientiert sein können.

Ebenfalls ist es möglich, beispielsweise an einen Blechteil durch Umbiegung Aufnahmeräume zu schaffen, in die abgewinkelte Enden eines zu verbindenden anderen Einzelbauteils einzuführen sind mit entsprechenden Klebeflächen innerhalb des Aufnahmeraumes. Ebenfalls ist es möglich, in solchen Bereichen auch noch durch Klemmung oder sonstige Verformung die Verbindungskräfte an der Klebefläche zu erhöhen.

Zur Unterstützung des Klebevorganges der miteinander zu verklebenden Bauteile kann es vorteilhaft sein, dass das Einzelbauoberteil, das Einzelbauunterteil und/oder die Zwischenbauteile in den Seitenschenkeln in den an einander anliegenden Kontaktflächenbereichen korrespondierende Durchbrüche aufweisen, dass durch diese Durchbrüche Klemmbolzen zum Zusammenklemmen einander benachbarter Bereiche von Einzelbauoberteil, Einzelbauunterteil den Seitenschenkeln der Zwischenbauteile angeordnet sind.

Die Erfindung bezieht sich des Weiteren noch auf landwirtschaftliche Geräte, Maschinen und insbesondere auch Pflüge, die mit einem Rahmenbauteil der zuvor beschriebenen Art ausgerüstet sind.

Weitere vorteilhafte Ausgestaltungen der Erfindung ergeben sich aus weiteren Ansprüchen, der nachfolgenden Beschreibung und der Zeichnung. In der Zeichnung zeigen:
- Fig. 1: ein Ausführungsbeispiel in Gestalt eines Pflugrahmens für beispielsweise einen Anbaudrehpflug,
- Fig. 2: eine Querschnittsdarstellung des Ausführungsbeispiels nach Fig. 1 im vergrößerten Maßstab,
- Fig. 3: die Einzelbauteile des Ausführungsbeispiels nach Fig. 1 in einer perspektivischen Darstellung,
- Fig. 4: ein weiteres Ausführungsbeispiel in Gestalt eines Pflugrahmens für beispielsweise einen Anbaudrehpflug,
- Fig. 5: eine Querschnittsdarstellung des Ausführungsbeispiels nach Fig. 4 im vergrößerten Maßstab,
- Fig. 6: die Einzelbauteile des Ausführungsbeispiels nach Fig. 4 in einer perspektivischen Darstellung,
- Fig. 7: ein weiteres Ausführungsbeispiel in Gestalt eines Pflugrahmens für beispielsweise einen Anbaudrehpflug,
- Fig. 8: eine Querschnittsdarstellung des Ausführungsbeispiels nach Fig. 7 im vergrößerten Maßstab,
- Fig. 9: die Einzelbauteile des Ausführungsbeispiels nach Fig. 7 in einer perspektivischen Darstellung,
- Fig.10: ein weiteres Ausführungsbeispiel in Gestalt eines Pflugrahmens für beispielsweise einen Anbaudrehpflug und
- Fig.11: die vergrößerte Einzelheit bzgl. der Bolzenverbindung zwischen dem Einzelrahmenoberteil und dem Schenkel des Zwischenbauteiles.

In der Zeichnung sind grundsätzlich übereinstimmende Bauteile mit übereinstimmenden Bezugsziffern versehen.

Allgemein mit 1 ist der Hohlprofilkörper eines Rahmenbauteils beziffert, der in dem dargestellten Ausführungsbeispiel aus einem Einzelbauoberteil 2, einem Einzelbauunterteil 3 und zwei Zwischenbauteilen 4 besteht. An dem Einzelbauoberteil 2 und dem Einzelbauunterteil 3 sind jeweils Bereiche 5 ausgebildet, die die beiden Zwischenbauteile 4 jeweils zu deren Seiten hin überragen, in denen Aufnahmen 6 für Anbauelemente bereits integriert sind.

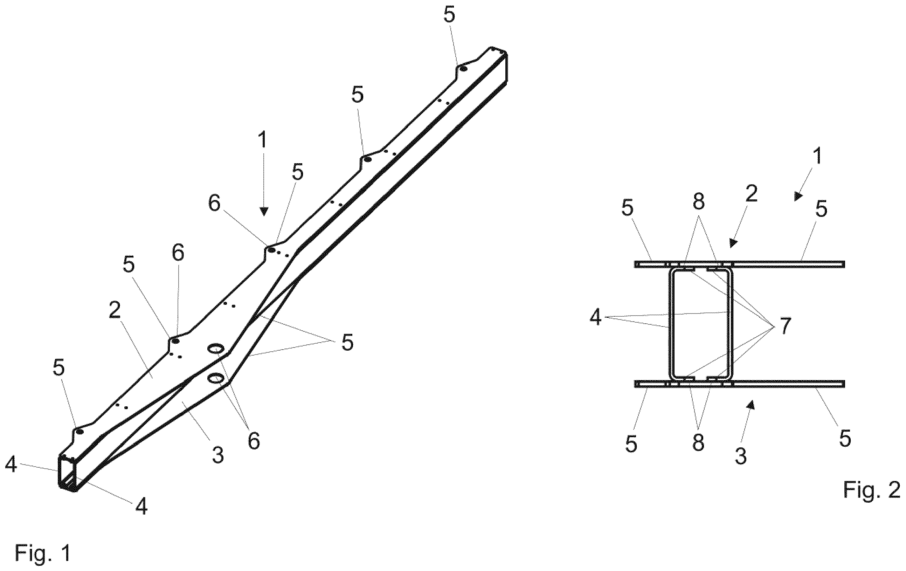

Wie näher Fig. 2 zu entnehmen ist, sind die Zwischenbauteile 4 im Querschnitt im Wesentlichen U-förmig ausgebildet und haben einander zugewandte Seitenschenkel 7, die die Kontakt- und damit die Kleberflächen 8 für das Einzelbauoberteil 2 bzw. das Einzelbauunterteil 3 aufweisen. Die einander zugewandten Kontaktflächen der Zwischenbauteile 4 und des Einzelbauoberteils 2 und des Einzelbauunterteils 3 sind bei dem gezeigten Ausführungsbeispiel eben ausgebildet. An diesen Stellen sind die Bauteile 2, 3 und 4 miteinander verklebt.

Das Einzelbauoberteil 2, das Einzelbauunterteil 3 und/oder die Zwischenbauteile 4 können als gestanzte Bleche ausgebildet sein, jedoch aus unterschiedlichen Materialien bestehen und auch unterschiedliche Wandstärken aufweisen, was mit nur geringem Fertigungsaufwand zu berücksichtigen ist, um unterschiedlichen Materialanforderungen Rechnung zu tragen. Damit ist das Rahmenbauteil auch von den zu verwendenden Materialien gegenüber dem herkömmlichen Stand der Technik wesentlich zu optimieren. Ebenfalls können noch besondere Härtebereiche durch eine unterschiedliche Werkstoffauswahl Berücksichtigung finden. Ebenfalls können Einzelbereiche auch gehärtet ausgebildet sein.

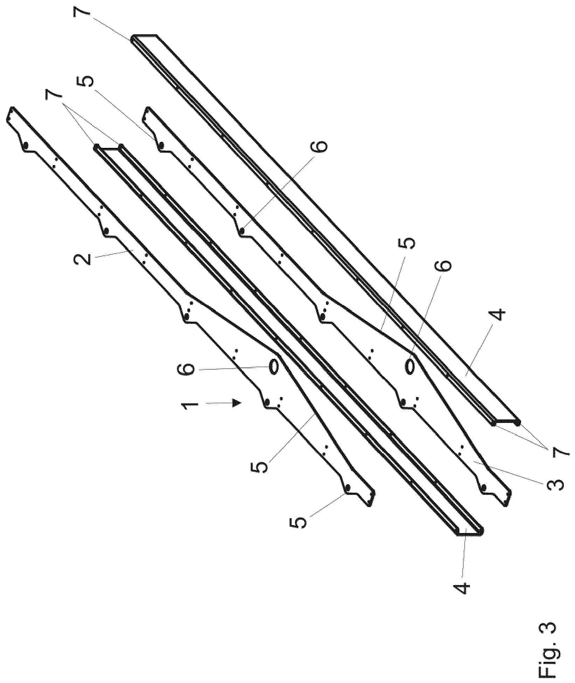

Fig. 3 verdeutlicht den Aufbau des Rahmenbauteils 1 aus dem Einzelbauoberteil 2, dem Einzelbauunterteil 3 sowie den Zwischenbauteilen 4.

Das im Ausführungsbeispiel dargestellte Rahmenbauteil 1 kommt als Hauptträger eines Pfluges zum Einsatz, an welchen die einzelnen Bauteile eines Pfluges, wie Schargrindel mit Pflugscharen, Vorschäler, Tiefenführungsrad oder -räder, Anbaubock, Zugelemente, etc. angeordnet und/oder angebaut werden.

In nicht dargestellter Weise berücksichtigt die Klebeverbindung 8 und auch vorherrschende Kräfte in verschiedenen Richtungen. Hierzu sind dann beispielsweise auch noch besondere Klebeverbindungsstellen als Formschlussverbindungen zwischen den zu verklebenden Bauteilen vorgesehen. Damit können Widerlager in verschiedenen Richtungen geschaffen werden, um Krafteinwirkungen aus verschiedenen Richtungen durch mechanische Anschläge entgegen zu wirken. Durch nicht dargestellte Ausformungen oder Einformungen in entsprechend kongruenter Ausbildung der zu verbindenden Teile wird dann sichergestellt, dass eine Ausformung in eine Einformung eingesetzt und verklebt werden kann, beispielsweise auch zusätzlich zu sonst noch vorgesehenen ebenen aneinander zugewandten zu verklebenden Flächen. Die Ausformungen und Ausnehmungen können die verschiedensten geometrischen Gestaltungen haben, beispielsweise rund oder mehreckig gestaltet sein, aber auch die Gestalt von raupenartigen Erhebungen und Ausnehmungen haben, in die je nach den vorherrschenden Kraftrichtungen auch verschieden orientiert sein können.

Die Einzelbauteile, sei es das Einzelbauoberteil 2, das Einzelbauunterteil 3 oder auch ein oder mehrere Zwischenbauteil(e) 4, können in nicht dargestellter Weise ihrerseits ein-, doppel- oder mehrlagig ausgebildet sein, und auch aus mehreren Einzelteilen in Längsrichtung des Pflugrahmenbauteils 1 zusammengesetzt werden, ohne dass es irgendwelcher Schweißnähte bedarf. Einzelbereiche können auch mit einem Härteüberzug versehen werden. Ein zusätzliches Anschweißen von zusätzlichen Verbindungs- oder Haltekörpern bedarf es in aller Regel nicht, weil die Anbindung bereits bei den Einzelbauteilen entsprechend berücksichtigt werden kann.

So ergibt sich eine optimierte Materialausnutzung. So kann die Ausgestaltung der einzelnen Bauteile 2, 3, 4 des Rahmens 1 und somit das Rahmenbauteil 1 selbst in den einzelnen Belastungsbereichen zumindest annähernd an die jeweiligen auf die einzelnen Bereiche einwirkenden Belastungen optimiert angepasst ausgebildet werden.

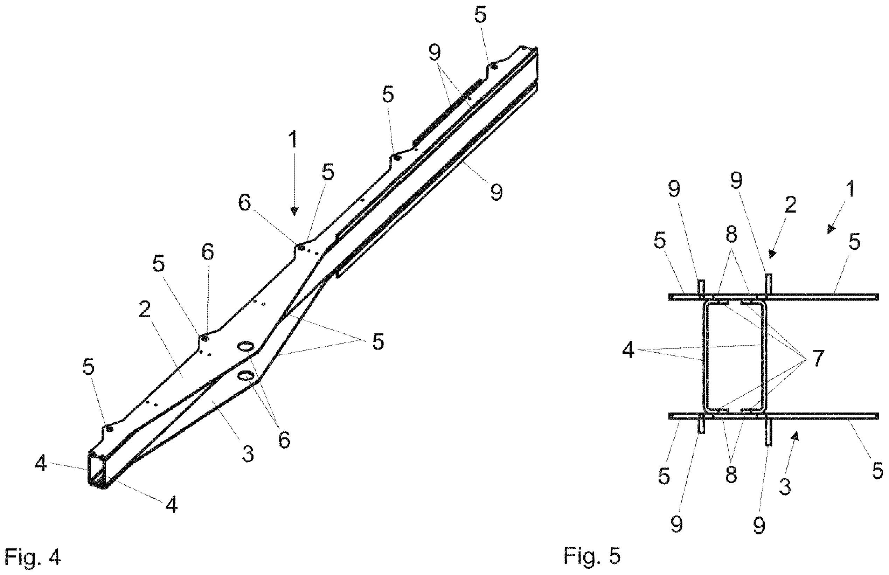

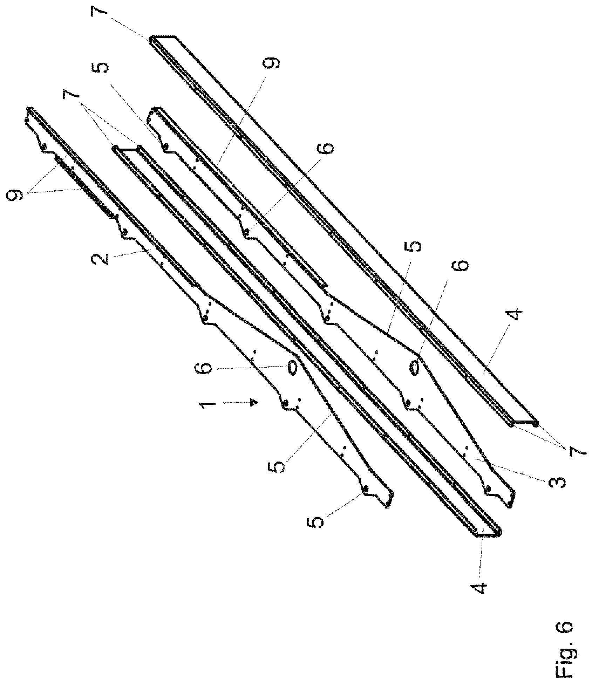

Das Rahmenbauteil 1 gemäß den Fig. 4 bis 6 unterscheidet sich von dem Rahmenbauteil 1 gemäß Fig. 1 bis 3 dadurch, dass in Teilbereichen das Rahmenoberteil 2 und das Rahmenunterteil 3 durch die Anformung von abgewinkelten Seitenschenkeln 9 winkel- oder U-förmig ausgebildet. An diesen Seitenschenkeln 9 können in nicht dargestellter Weise Anbauelemente festgelegt werden.

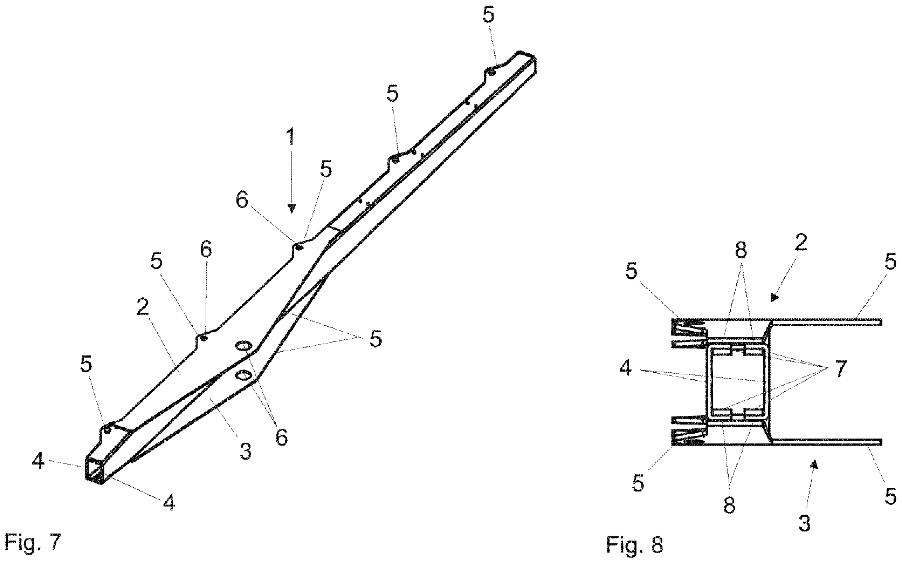

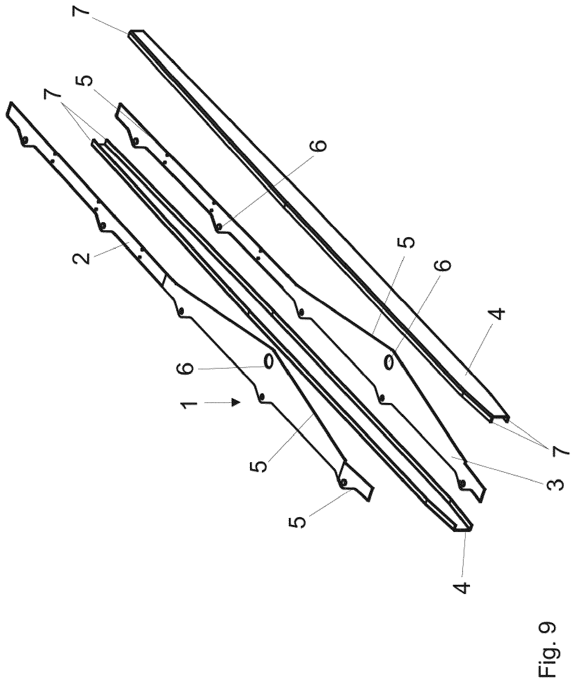

Das Rahmenbauteil 1 gemäß den Fig. 7 bis 9 unterscheidet sich von dem Rahmenbauteil 1 gemäß Fig. 1 bis 3 dadurch, dass
dass das Einzelbauoberteil 2, das Einzelbauunterteil 3 und/oder die Zwischenbauteile 4 als Träger gleicher Festigkeit ausgebildet sind. Im Ausführungsbeispiel wird dies dadurch erreicht, die Zwischenbauteile 4 zu ihrem jeweiligen Ende hin sich zumindest teilweise verjüngen.

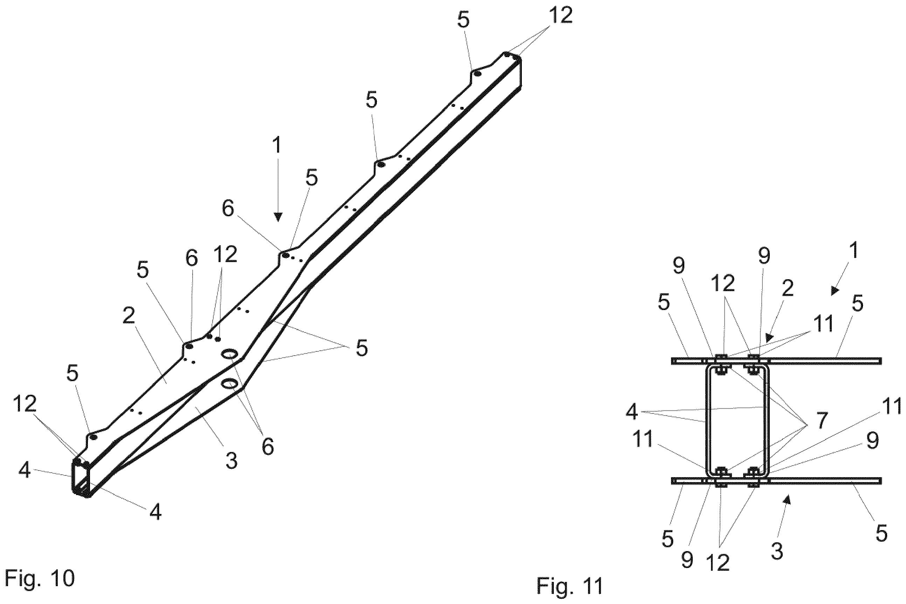

In dem Ausführungsbeispiel nach den Fig.10 und 11 ist gezeigt, dass das Einzelbauoberteil 2, das Einzelbauunterteil 3 und/oder die Seitenschenkel 7 der Zwischenbauteile 4 in den an einander anliegenden Kontaktflächenbereichen 10 korrespondierende Durchbrüche 11 aufweisen. Hierbei zeigt die Fig. 11 die Verbindung zwischen dem Einzelbauoberteil 2 und dem Seitenschenkeln 7 des Zwischenbauteiles 4. Durch die Durchbrüche 11 sind als Schraubbolzen 12 ausgebildete Klemmbolzen zum Zusammenklemmen einander benachbarter Bereiche von Einzelbauoberteil 2, Einzelbauunterteil 3 und den Seitenschenkeln 7 der Zwischenbauteile 4 gesteckt. Durch das Verklemmen der aneinander anliegenden Bauteile 2, 3, 4, 7 wird der Klebevorgang zwischen miteinander zu verklebenden Bauteile 2, 3, 4, 7 im Klebe- 8 und Kontaktflächenbereich 10 unterstützt und begünstigt.

## Patentansprüche

1. Rahmenbauteil für vorzugsweise landwirtschaftliche Geräte und Maschinen, insbesondere Pflugrahmenbauteil für Anbaupflüge, Anhängepflüge und Aufsattelpflüge mit einem eine Oberseite, eine Unterseite sowie Seitenflächen aufweisenden Hohlprofilkörper (1), an dem Werkzeuge, Werkzeugträger, Konsolen, Stützräder und dergleichen Anbauelemente abstützbar sind, wobei der Hohlprofilkörper (1) durch zumindest zwei miteinander verklebte Einzelbauteile (2, 3, 4) gebildet ist, wobei der Hohlprofilkörper (1) durch ein Einzelbauoberteil (2) und ein Einzelbauunterteil (3) gebildet ist, die über zwei mit einem Abstand zueinander angeordnete und die Seitenflächen des Hohlprofilkörpers darstellende Zwischenbauteile (4) miteinander verbunden sind, wobei die Zwischenbauteile mit dem Einzelbauunterteil (3) und dem Einzelbauoberteil (2) verklebt sind,
**dadurch gekennzeichnet, dass**
die Zwischenbauteile (4) im Querschnitt im Wesentlichen U-förmig ausgebildet sind, mit im montierten Zustand der Teile aufeinander zu gerichteten Seitenschenkeln, wobei ein Paar von Seitenschenkeln mit dem Einzelbauoberteil (2) und ein Paar einander zugeordneter Schenkel der Zwischenbauteile (4) mit dem Einzelbauunterteil (3) verklebt sind.

2. Rahmenbauteil nach Anspruch 1, **dadurch gekennzeichnet, dass** ein Einzelbauoberteil (2) und/oder ein Einzelbauunterteil (3) das Zwischenbauteil (4) überragende Bereiche (5) hat zum Anbau von Anbauelementen.

3. Rahmenbauteil nach Anspruch 1 oder 2, **dadurch gekennzeichnet, dass** ein Einzelbauoberteil (2) und/oder ein Einzelbauunterteil (3) im Wesentlichen im Querschnitt winkel- oder U-förmig ausgebildet sind mit abgewinkelten Seitenschenkeln (9), an denen Anbauelemente festlegbar sind.

4. Rahmenbauteil nach einem der Ansprüche 1 bis 3, **dadurch gekennzeichnet, dass** ein Einzelbauoberteil (2) und/oder ein Einzelbauunterteil (3) aus mehreren Einzelbauoberteilen bzw. Einzelbauunterteilen bestehen.

5. Rahmenbauteil nach einem der Ansprüche 1 bis 4, **dadurch gekennzeichnet, dass** ein Einzelbauoberteil (2), ein Einzelbauunterteil (3) und/oder ein Zwischenbauteil (4) unterschiedliche Wandstärken aufweisen.

6. Rahmenbauteil nach einem der Ansprüche 1 bis 5, **dadurch gekennzeichnet, dass** ein Einzelbauoberteil (2), ein Einzelbauunterteil (3) und/oder ein Zwischenbauteil (4) aus unterschiedlichen Materialien bestehen.

7. Rahmenbauteil nach einem der Ansprüche 1 bis 6, **dadurch gekennzeichnet, dass** ein Einzelbauoberteil (2), ein Einzelbauunterteil (3) und/oder ein Zwischenbauteil (4) zumindest bereichsweise gehärtet ausgebildet sind.

8. Rahmenbauteil nach Anspruch 4, **dadurch gekennzeichnet, dass** die mehreren Einzelbauoberteile (2), Einzelbauunterteile (3) und/oder Zwischenbauteile (4) ihrerseits aus unterschiedlichen Materialien bestehen.

9. Rahmenbauteil nach einem der Ansprüche 1 bis 8 , **dadurch gekennzeichnet, dass** ein Einzelbauoberteil (2), ein Einzelbauunterteil (3) und/oder ein Zwischenbauteil (4) einen erhaben ausgebildeten Kleberkontaktflächenbereich (8) aufweist, der in eine entsprechend kongruent ausgebildete Ausnehmung des zugeordneten, zu verklebenden Einzelbau- (2, 3) und/oder Zwischenbauteils (4) im Wesentlichen formschlüssig einsetzbar ist.

10. Rahmenbauteil nach einem der Ansprüche 1 bis 9, **dadurch gekennzeichnet, dass** an einem Einzelbauoberteil (2), einem Einzelbauunterteil (3) und/oder einem Zwischenbauteil (4) abgewinkelte Aufnahmeräume (9) ausgebildet sind, in die abgewinkelt Enden des zugeordneten zu verklebenden Bauteils (2, 3, 4) einführbar und zu verkleben sind.

11. Rahmenbauteil nach einem der Ansprüche 1 bis 10, **dadurch gekennzeichnet, dass** das Einzelbauoberteil (2), das Einzelbauunterteil (3) und/oder die Zwischenbauteile (4) als Träger gleicher Festigkeit ausgebildet sind.

12. Rahmenbauteil nach einem der Ansprüche 1 bis 11, **dadurch gekennzeichnet, dass** das Einzelbauoberteil (2), das Einzelbauunterteil (3) und/oder die Zwischenbauteile (4) in den Seitenschenkeln in den an einander anliegenden Kontaktflächenbereichen (8, 10) korrespondierende Durchbrüche (11) aufweisen, dass durch diese Durchbrüche (11) Klemmbolzen (12) zum Zusammenklemmen einander benachbarter Bereiche von Einzelbauoberteil (2), Einzelbauunterteil (3) den Seitenschenkeln der Zwischenbauteile (4) angeordnet sind.

13. Landwirtschaftliches Gerät mit einem Rahmenbauteil, **gekennzeichnet durch** ein Rahmenbauteil nach einem der Ansprüche 1 bis 12.

14. Landwirtschaftliche Maschine mit einem Rahmenbauteil, **gekennzeichnet durch** ein Rahmenbauteil nach einem der Ansprüche 1 bis 12.

15. Pflug, mit einem Pflugrahmenbauteil, **gekennzeichnet durch** ein Pflugrahmenbauteil nach einem der Ansprüche 1 bis 12.

## Claims

1. Frame component for preferably agricultural devices and machines, in particular plough frame component for mounted ploughs, trailing ploughs and semi-mounted ploughs having a hollow-profile body (1) having a top side, an underside and side faces, tools, tool carriers, brackets, support wheels and similar attachment elements being supportable on said hollow-profile body (1), wherein the hollow-profile body (1) is formed by at least two individual components (2, 3, 4) adhesively bonded together, wherein the hollow-profile body (1) is formed by an individual top component (2) and an individual bottom component (3) which are connected together via two intermediate components (4) that are arranged in a manner spaced apart from one another and represent the side faces of the hollow-profile body, wherein the intermediate components are adhesively bonded to the individual bottom component (3) and the individual top component (2),
**characterized in that**
the intermediate components (4) are formed in a substantially U-shaped manner in cross section, having side limbs that face one another in the assembled state of the parts, wherein a pair of side limbs are adhesively bonded to the individual top component (2) and a pair of mutually assigned limbs of the intermediate components (4) are adhesively bonded to the individual bottom component (3).

2. Frame component according to Claim 1, **characterized in that** an individual top component (2) and/or an individual bottom component (3) has regions (5) that project beyond the intermediate component (4), for attaching attachment elements.

3. Frame component according to Claim 1 or 2, **characterized in that** an individual top component (2) and/or an individual bottom component (3) are formed in a substantially angular or U-shaped manner in cross section, with angled side limbs (9), to which attachment elements are able to be fastened.

4. Frame component according to one of Claims 1 to 3, **characterized in that** an individual top component (2) and/or an individual bottom component (3) consist of a plurality of individual top components and/or individual bottom components.

5. Frame component according to one of Claims 1 to 4, **characterized in that** an individual top component (2), an individual bottom component (3) and/or an intermediate component (4) have different wall thicknesses.

6. Frame component according to one of Claims 1 to 5, **characterized in that** an individual top component (2), an individual bottom component (3) and/or an intermediate component (4) consist of different materials.

7. Frame component according to one of Claims 1 to 6, **characterized in that** an individual top component (2), an individual bottom component (3) and/or an intermediate component (4) are formed at least regionally in a hardened manner.

8. Frame component according to Claim 4, **characterized in that** the plurality of individual top components (2), individual bottom components (3) and/or intermediate components (4) for their part consist of different materials.

9. Frame component according to one of Claims 1 to 8, **characterized in that** an individual top component (2), an individual bottom component (3) and/or an intermediate component (4) has an adhesive contact surface region (8) formed in a raised manner, said adhesive contact surface region (8) being able to be inserted in a substantially form-fitting manner into a correspondingly congruently formed recess in the associated individual component (2, 3) and/or intermediate component (4) to be adhesively bonded.

10. Frame component according to one of Claims 1 to 9, **characterized in that** angled receiving spaces (9) are formed on an individual top component (2), an individual bottom component (3) and/or an intermediate component (4), angled ends of the associated component (2, 3, 4) to be adhesively bonded being able to be inserted into said receiving spaces (9) and being intended to be adhesively bonded.

11. Frame component according to one of Claims 1 to 10, **characterized in that** the individual top component (2), the individual bottom component (3) and/or the intermediate components (4) are configured as carriers of identical strength.

12. Frame component according to one of Claims 1 to 11, **characterized in that** the individual top component (2), the individual bottom component (3) and/or the intermediate components (4) have corresponding apertures (11) in the side limbs in the adjoining contact surface regions (8, 10), and **in that** clamping bolts (12) for clamping mutually adjacent regions of the individual top component (2), individual bottom component (3) the side limbs of the intermediate components (4) together are arranged through these apertures (11).

13. Agricultural device having a frame component, **characterized by** a frame component according to one of Claims 1 to 12.

14. Agricultural machine having a frame component, **characterized by** a frame component according to one of Claims 1 to 12.

15. Plough having a plough frame component, **characterized by** a plough frame component according to one of Claims 1 to 12.

## Revendications

1. Élément de bâti de préférence pour appareils et machines agricoles, notamment élément de bâti de charrue pour des charrues montées, des charrues trainées et des charrues semi-portées avec un corps de profilé creux (1) comportant un côté supérieur, un côté inférieur ainsi que des surfaces latérales, au niveau duquel des outils, des supports d'outil, des consoles, des roues porteuses et autres éléments montés équivalents peuvent être maintenus, le corps de profilé creux (1) étant formé par au moins deux composants individuels (2, 3, 4) collés l'un à l'autre, le corps de profilé creux (1) étant formé par un composant supérieur individuel (2) et un composant inférieur individuel (3) reliés entre eux via deux composants intermédiaires (4) disposés à une certaine distance l'un de l'autre et représentant les surfaces latérales du corps de profilé creux, les composants intermédiaires étant collés au composant inférieur individuel (3) et au composant supérieur individuel (2), **caractérisé en ce que** les composants intermédiaires (4) sont réalisés en section transversale pour l'essentiel en forme de U, avec des branches latérales orientées l'une au-dessus de l'autre à l'état monté des parties, une paire de branches latérales étant collée au composant supérieur individuel (2) et une paire de branches associées l'une à l'autre des composants intermédiaires (4) étant collée au composant inférieur individuel (3).

2. Élément de bâti selon la revendication 1, **caractérisé en ce qu'**un composant supérieur individuel (2) et/ou un composant inférieur individuel (3) a des zones (5) saillant hors du composant intermédiaire (4) pour monter des éléments montés.

3. Élément de bâti selon la revendication 1 ou 2, **caractérisé en ce qu'**un composant supérieur individuel (2) et/ou un composant inférieur individuel (3) sont réalisés pour l'essentiel en angle ou en forme de U en section transversale avec des branches latérales (9) coudées, des éléments montés pouvant être fixés au niveau desdits composants.

4. Élément de bâti selon l'une quelconque des revendications 1 à 3, **caractérisé en ce qu'**un composant supérieur individuel (2) et/ou un composant inférieur individuel (3) se composent de plusieurs composants supérieurs individuels et/ou de plusieurs composants inférieurs individuels.

5. Élément de bâti selon l'une quelconque des revendications 1 à 4, **caractérisé en ce qu'**un composant supérieur individuel (2), un composant inférieur individuel (3) et/ou un composant intermédiaire (4) présentent différentes épaisseurs de paroi.

6. Élément de bâti selon l'une quelconque des revendications 1 à 5, **caractérisé en ce qu'**un composant supérieur individuel (2), un composant inférieur individuel (3) et/ou un composant intermédiaire (4) se composent de différents matériaux.

7. Élément de bâti selon l'une quelconque des revendications 1 à 6, **caractérisé en ce qu'**un composant supérieur individuel (2), un composant inférieur individuel (3) et/ou un composant intermédiaire (4) sont réalisés au moins en partie de façon durcie.

8. Élément de bâti selon la revendication 4, **caractérisé en ce que** les multiples composants supérieurs individuels (2), composants inférieurs individuels (3) et/ou composants intermédiaires (4) se composent chacun de différents matériaux.

9. Élément de bâti selon l'une quelconque des revendications 1 à 8, **caractérisé en ce qu'**un composant supérieur individuel (2), un composant inférieur individuel (3) et/ou un composant intermédiaire (4) comporte une zone superficielle de contact de colle (8) pouvant être inséré pour l'essentiel par complémentarité de formes dans un évidement correspondant réalisé de façon correspondante du composant individuel (2, 3) et/ou du composant intermédiaire (4) à coller associé.

10. Élément de bâti selon l'une quelconque des revendications 1 à 9, **caractérisé en ce que** des espaces de logement (9) sont réalisés de façon coudée au niveau d'un composant supérieur individuel (2), d'un composant inférieur individuel (3) et/ou d'un composant intermédiaire (4), des extrémités coudées du composant (2, 3, 4) associé à coller peuvent être introduites et être collées dans ces espaces.

11. Élément de bâti selon l'une quelconque des revendications 1 à 10, **caractérisé en ce que** le composant supérieur individuel (2), le composant inférieur individuel (3) et/ou les composants intermédiaires (4) sont réalisés sous la forme d'un support de même solidité.

12. Élément de bâti selon l'une quelconque des revendications 1 à 11, **caractérisé en ce que** le composant supérieur individuel (2), le composant inférieur individuel (3) et/ou les composants intermédiaires (4) comportent des passages traversants (11) dans les branches latérales, dans les zones superficielles de contact (8, 10) butant les uns contre les autres, que les boulons de serrage (12) traversant ces passages traversants (11) sont disposés de façon à serrer entre elles les zones connexes du composant supérieur individuel (2), du composant inférieur individuel (3) des branches latérales des composants intermédiaires (4).

13. Appareil agricole avec un élément de bâti, **caractérisé par** un élément de bâti selon l'une quelconque des revendications 1 à 12.

14. Machine agricole avec un élément de bâti, **caractérisé par** un élément de bâti selon l'une quelconque des revendications 1 à 12.

15. Charrue, avec un élément de bâti de charrue, **caractérisé par** un élément de bâti de charrue selon l'une quelconque des revendications 1 à 12.
